# EUROPÄISCHE PATENTANMELDUNG

(11) **EP 2 584 492 A2**
(43) Veröffentlichungstag der Anmeldung: **24.04.2013**
(21) Anmeldenummer: 12181731.6
(22) Anmeldetag: 24.08.2012
(51) Int. Cl.: G06K 9/00

(54) **Erkennen einer Straßenbeleuchtung**

(30) Priorität: 17.10.2011 DE 102011084613
(71) Anmelder: ROBERT BOSCH GMBH, 70442 Stuttgart (DE)
(72) Erfinder: Schwarzenberg, Gregor, 75365 Calw (DE)

(57) **Zusammenfassung**

Bei einem Verfahren zum Erkennen einer Straßenbeleuchtung wird an einer Straßenoberfläche reflektiertes Licht mit einer Kamera aufgenommen und eine zeitliche Modulation der Helligkeit des reflektierten Lichts detektiert.

## Beschreibung

Die Erfindung betrifft ein Verfahren zum Erkennen einer Straßenbeleuchtung gemäß Patentanspruch 1, eine Vorrichtung zum Erkennen einer Straßenbeleuchtung gemäß Patentanspruch 7, sowie ein Kraftfahrzeug mit einer Vorrichtung zum Erkennen einer Straßenbeleuchtung gemäß Patentanspruch 10.

### Stand der Technik

Es ist bekannt, Kraftfahrzeuge mit videobasierten Fahrassistenzsystemen auszustatten, die während einer Nachtfahrt Lichtobjekte verfolgen und als Fremdverkehr, als Reflexionen oder als Straßenbeleuchtungen klassifizieren. Für die Klassifikation eines verfolgten Lichtobjekts als Straßenlaterne wird häufig die Position und die Bewegung des Lichtobjekts im durch die Kamera erfassten Bild ausgewertet. Dies ist beispielsweise in der US 5,837,994 beschrieben. Es ist auch bekannt, eine Frequenzanalyse eines durch ein Lichtobjekt ausgesandten Lichts durchzuführen, um das Lichtobjekt zu klassifizieren. Die US 5,837,994 erwähnt die zusätzliche Möglichkeit, eine durch einen Betrieb mit Wechselspannung verursachte zeitliche Modulation der Intensität eines durch ein Lichtobjekt ausgesandten Lichts zu detektieren, um das Lichtobjekt als Straßenbeleuchtung zu klassifizieren.

Es ist bekannt, dass aus dem Vorhandensein einer Straßenbeleuchtung geschlossen werden kann, dass sich das Kraftfahrzeug innerhalb einer Ortschaft bewegt. Es ist auch bekannt, innerhalb geschlossener Ortschaften eine Fahrzeugbeleuchtung eines Kraftfahrzeugs anzupassen.

Es hat sich gezeigt, dass eine direkte Verfolgung von Lichtobjekten mit einer Kamera in häufigen Fällen zu einer Fehlklassifikation des Lichtobjekts führt. So werden beispielsweise Fußwegbeleuchtungen, Flutlichter eines Fußballfeldes, Laternen an Häusern und andere Lichtquellen fälschlich als Straßenbeleuchtung klassifiziert. Ein weiteres Problem besteht darin, dass sich das Sichtfeld einer für eine Spurerkennung verwendeten Kamera nicht zur direkten Erfassung von Straßenbeleuchtungen eignet, was ein Vorsehen zusätzlicher Kameras erfordert.

### Offenbarung der Erfindung

Die Aufgabe der vorliegenden Erfindung besteht deshalb darin, ein verbessertes Verfahren zum Erkennen einer Straßenbeleuchtung anzugeben. Diese Aufgabe wird durch ein Verfahren mit den Merkmalen des Anspruchs 1 gelöst. Es ist weiter Aufgabe der vorliegenden Erfindung, eine verbesserte Vorrichtung zum Erkennen einer Straßenbeleuchtung bereitzustellen. Diese Aufgabe wird durch eine Vorrichtung mit den Merkmalen des Anspruchs 7 gelöst. Eine weitere Aufgabe der vorliegenden Erfindung besteht darin, ein Kraftfahrzeug mit einer verbesserten Vorrichtung zum Erkennen einer Straßenbeleuchtung bereitzustellen. Diese Aufgabe wird durch ein Kraftfahrzeug mit den Merkmalen des Anspruchs 10 gelöst. Bevorzugte Weiterbildungen sind in den abhängigen Ansprüchen angegeben.

Bei einem erfindungsgemäßen Verfahren zum Erkennen einer Straßenbeleuchtung wird an einer Straßenoberfläche reflektiertes Licht mit einer Kamera aufgenommen und eine zeitliche Modulation der Helligkeit des reflektierten Lichts detektiert. Vorteilhafterweise fordert dieses Verfahren keine direkte Sichtbarkeit der Lichtquelle für die Kamera. Vorteilhafterweise kann für das Verfahren daher eine nach unten ausgerichtete Kamera genutzt werden, die ansonsten zur Spurerkennung dient.

Bevorzugt wird eine von einer Netzfrequenz eines Stromnetzes abhängige zeitliche Modulation der Helligkeit des reflektierten Lichts detektiert. Vorteilhaftweise nutzt das Verfahren die Tatsache, dass eine Straßenbeleuchtung mit Wechselspannung betrieben wird, während Fahrzeugbeleuchtungen mit Gleichspannung betrieben werden, um Straßenbeleuchtungen von anderen Lichtquellen zu unterscheiden.

In einer Ausführungsform des Verfahrens wird das reflektierte Licht mit einer bimodal geregelten Kamera aufgenommen. Vorteilhafterweise erlaubt eine bimodal geregelte Kamera eine zuverlässige Erkennung einer zeitlichen Modulation der Helligkeit des reflektierten Lichts.

Es ist zweckmäßig, dass das reflektierte Licht mit einer Bildwiederholfrequenz aufgenommen wird, wobei eine Netzfrequenz eines Stromnetzes ein ganzzahliges Vielfaches der Bildwiederholfrequenz ist. Vorteilhafterweise kann die zeitliche Modulation der Helligkeit des reflektierten Lichts dann besonders einfach und zuverlässig erkannt werden.

In einer anderen Ausführungsform des Verfahrens wird das reflektierte Licht mit einer monomodal geregelten Kamera aufgenommen. Vorteilhafterweise gestattet auch eine monomodal geregelte Kamera eine zuverlässige Erkennung einer zeitlichen Modulation der Helligkeit des reflektierten Lichts.

In dieser Ausführungsform ist es zweckmäßig, dass das reflektierte Licht mit einer Bildwiederholfrequenz aufgenommen wird, die kein ganzzahliges Vielfaches einer Netzfrequenz eines Stromnetzes ist. Vorteilhafterweise wird dadurch eine Maskierung der zeitlichen Modulation der Helligkeit des reflektierten Lichts durch die Bildwiederholfrequenz der monomodal geregelten Kamera vermieden.

Eine erfindungsgemäße Vorrichtung zum Erkennen einer Straßenbeleuchtung umfasst eine Kamera, die dazu vorgesehen ist, an einer Straßenoberfläche reflektiertes Licht aufzunehmen, und eine Auswerteeinheit, die dazu ausgebildet ist, eine zeitliche Modulation der Helligkeit des reflektierten Lichts zu erkennen. Vorteilhafterweise kann die Kamera dieser Vorrichtung auf die Straßenoberfläche ausgerichtet sein und auch für eine Spurerkennung genutzt werden. Ein weiterer Vorteil ist, dass die Kamera nur das Licht von Lichtquellen erfasst, die tatsächlich die Straße beleuchten. Somit werden Beleuchtungen von Gebäuden oder Fußwegen, die die befahrene Straße nicht beleuchten, gar nicht erst erfasst.

In einer Ausführungsform der Vorrichtung ist die Kamera eine bimodal geregelte Kamera, die eine Bildwiederholfrequenz aufweist, wobei eine Netzfrequenz eines Stromnetzes ein ganzzahliges Vielfaches der Bildwiederholfrequenz ist. Vorteilhafterweise gestattet die Vorrichtung dann eine zuverlässige Erkennung einer zeitlichen Modulation der Helligkeit des reflektierten Lichts.

In einer anderen Ausführungsform der Vorrichtung ist die Kamera eine monomodal geregelte Kamera, die eine Bildwiederholfrequenz aufweist, die kein ganzzahliges Vielfaches einer Netzfrequenz eines Stromnetzes ist. Vorteilhafterweise gestattet die Vorrichtung auch in dieser Ausführungsform eine zuverlässige Erkennung einer zeitlichen Modulation der Helligkeit des reflektierten Lichts.

Ein erfindungsgemäßes Kraftfahrzeug weist eine Vorrichtung der vorgenannten Art auf. Vorteilhafterweise kann das Kraftfahrzeug dann selbständig das Vorhandensein einer Straßenbeleuchtung erkennen.

Die Erfindung wird nun anhand der beigefügten Figuren näher erläutert. Dabei zeigen:
Figur 1 eine schematische Darstellung eines Kraftfahrzeugs auf einer Straße mit Straßenbeleuchtung;
Figur 2 ein erstes Diagramm zur Erläuterung einer Lichtquelle, deren Helligkeit nicht zeitlich moduliert ist;
Figur 3 ein zweites Diagramm zur Erläuterung einer Detektion der nicht modulierten Lichtquelle;
Figur 4 ein drittes Diagramm zur Erläuterung einer Lichtquelle mit zeitlich modulierter Helligkeit; und
Figur 5 ein viertes Diagramm zur Erläuterung der Detektion der zeitlich modulierten Lichtquelle.

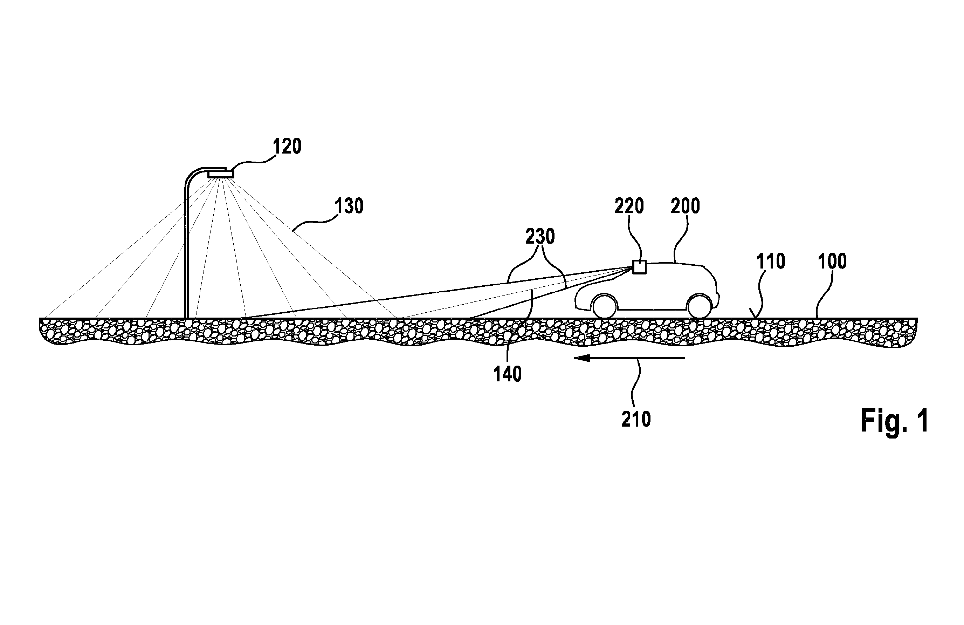

Figur 1 zeigt eine stark schematisierte Darstellung eines Kraftfahrzeugs 200, das eine Straße 100 befährt. Die Straße 100 weist eine Straßenoberfläche 110 auf. Das Kraftfahrzeug 200 bewegt sich in eine Fahrtrichtung 210.

Die Straße 100 weist eine Straßenbeleuchtung 120 auf. Die Straße 100 kann beispielsweise eine Straße in einer Stadt sein. Die Straßenbeleuchtung 120 ist im dargestellten Beispiel eine Laterne. Die Straßenbeleuchtung 120 sendet Licht 130 in Richtung der Straßenoberfläche 110 aus. Das Licht 130 wird teilweise an der Straßenoberfläche 110 reflektiert und als reflektiertes Licht 140 von der Straßenoberfläche 110 zurückgeworfen.

Das Kraftfahrzeug 200 weist eine Kamera 220 auf, deren Sichtfeld 230 auf einen Bereich der Straßenoberfläche 110 gerichtet ist, der in Fahrtrichtung 210 vor dem Kraftfahrzeug 200 liegt. Die Kamera 220 kann beispielsweise für eine durch ein Fahrerassistenzsystem des Kraftfahrzeugs 200 automatisch durchgeführte Spurerkennung dienen. Die Kamera 220 erfasst jedoch auch einen Teil des durch die Straßenoberfläche 110 reflektierten Lichts 140 der Straßenbeleuchtung 120. Die Kamera 220 kann zusätzlich von Rücklichtern vorausfahrender Kraftfahrzeuge ausgesandtes und von den Scheinwerfern entgegenkommender Fahrzeuge ausgesandtes Licht erfassen.

Das Kraftfahrzeug 200 ist mit einer Vorrichtung ausgestattet, die dazu dient, dass Vorhandensein der Straßenbeleuchtung 120 zu erkennen. Hierzu erkennt die Vorrichtung, dass das von der Kamera 220 des Kraftfahrzeugs 200 erfasste reflektierte Licht 140 von der Straßenbeleuchtung 120 ausgesandt wurde.

Straßenbeleuchtungen wie die Straßenbeleuchtung 120 der Figur 1 werden mit Wechselspannung aus einem allgemeinen Versorgungsnetz betrieben. Diese Wechselspannung weist eine Frequenz von beispielsweise 50 Hz oder 60 Hz auf, bei Straßenlaternen auf LED-Basis werden auch höhere Frequenzen erzielt. Durch den Betrieb mit Wechselspannung ist die Intensität des durch die Straßenbeleuchtung 120 ausgesandten Lichts 130 zeitlich moduliert und pulsiert beispielsweise mit einer Frequenz von 100 Hz oder 120 Hz. Scheinwerfer von Kraftfahrzeugen werden hingegen mit Gleichspannung betrieben. Daher ist die Intensität eines von einem Fahrzeugscheinwerfer ausgesandten Lichts zeitlich nicht moduliert und pulsiert nicht.

Die Kamera 220 des Kraftfahrzeugs 200 kann eine monomodal geregelte Kamera oder eine mindestens bimodal geregelte Kamera sein. Als monomodal geregelte Kamera wird im Kontext dieser Beschreibung eine Kamera bezeichnet, die Bilder mit einer festgelegten Bildwiederholfrequenz aufnimmt, wobei jedes der Bilder mit der selben Belichtungszeit aufgenommen wird. Als mindestens bimodal geregelte Kamera wird im Kontext dieser Beschreibung eine Kamera bezeichnet, die Bilder mit einer festgelegten Bildwiederholfrequenz aufnimmt, dabei jedoch einander nachfolgende Bilder unterschiedlich lange belichtet. Beispielsweise kann eine bimodal geregelte Kamera jedes zweite aufgenommene Bild mit einer kurzen Belichtungszeit und jedes andere zweite Bild mit einer langen Belichtungszeit aufnehmen.

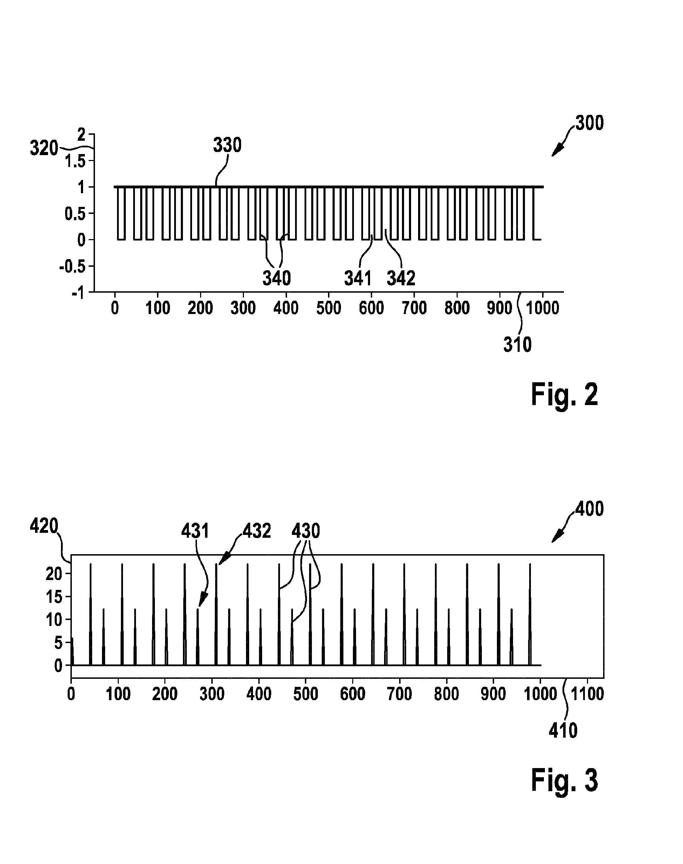

Figur 2 zeigt ein erstes Diagramm 300 zur Erläuterung der Unterscheidung von Licht einer Straßenbeleuchtung von Licht aus anderen Lichtquellen. Auf einer horizontalen Achse des ersten Diagramms 300 ist eine Zeit 310 in ms aufgetragen. Auf einer vertikalen Achse des ersten Diagramms 300 ist eine Lichtintensität 320 in beliebigen Einheiten aufgetragen. Ein Intensitätsverlauf 330 gibt einen zeitlichen Verlauf einer Intensität eines von einer mit Gleichspannung betriebenen Lichtquelle ausgesandten Lichts wieder. Der Intensitätsverlauf 330 ist zeitlich konstant. Die Intensität des von der Lichtquelle ausgesandten Lichts pulsiert somit nicht.

Weiter zeigt das erste Diagramm 300 der Figur 2 einen Belichtungsverlauf 340 einer bimodal geregelten Kamera. Die bimodal geregelte Kamera nimmt immer abwechselnd Bilder mit einer kurzen ersten Belichtungszeit 341 und einer langen zweiten Belichtungszeit 342 auf.

Figur 3 zeigt ein zweites Diagramm 400, auf dessen horizontaler Achse eine Zeit 410 in ms und auf dessen vertikaler Achse eine detektierte Helligkeit 420 in willkürlichen Einheiten dargestellt ist. Der Begriff "Helligkeit" bezeichnet im Kontext dieser Beschreibung eine Eigenschaft der von der Kamera aufgenommenen Bilder, aus der sich auf die Intensität des von der Kamera aufgenommenen Lichts rückschließen lässt. Intensiveres Licht führt zu Bildern mit größerer Helligkeit. Ebenso ergibt eine längere Belichtungszeit ein Bild mit größerer Helligkeit.

Eine Auswerteeinheit hat die gemäß des Belichtungszeitverlaufs 340 des ersten Diagramms 300 der Figur 2 aufgenommenen Bilder hinsichtlich ihrer Helligkeit ausgewertet. Daraus ergibt sich der im zweiten Diagramm 400 dargestellte Helligkeitsverlauf 430. Erkennbar ist, dass jedes zweite durch die Kamera aufgenommene Bild eine niedrige erste Helligkeit 431 aufweist, während die übrigen Bilder eine hohe zweite Helligkeit 432 aufweisen. Die mit der kurzen ersten Belichtungszeit 341 aufgenommenen Bilder weisen somit die niedrige erste Helligkeit 431 auf. Die mit der langen zweiten Belichtungszeit 342 aufgenommenen Bilder weisen die hohe zweite Helligkeit 432 auf. Eine zusätzliche Variation des Helligkeitsverlaufs 430 ist nicht vorhanden. Somit kann die Auswerteeinheit darauf schließen, dass das durch die Kamera detektierte reflektierte Licht eine zeitlich unveränderliche Intensität aufweist und also von einer mit Gleichspannung betriebenen Lichtquelle ausgesandt wurde. Somit ist die Lichtquelle keine Straßenbeleuchtung.

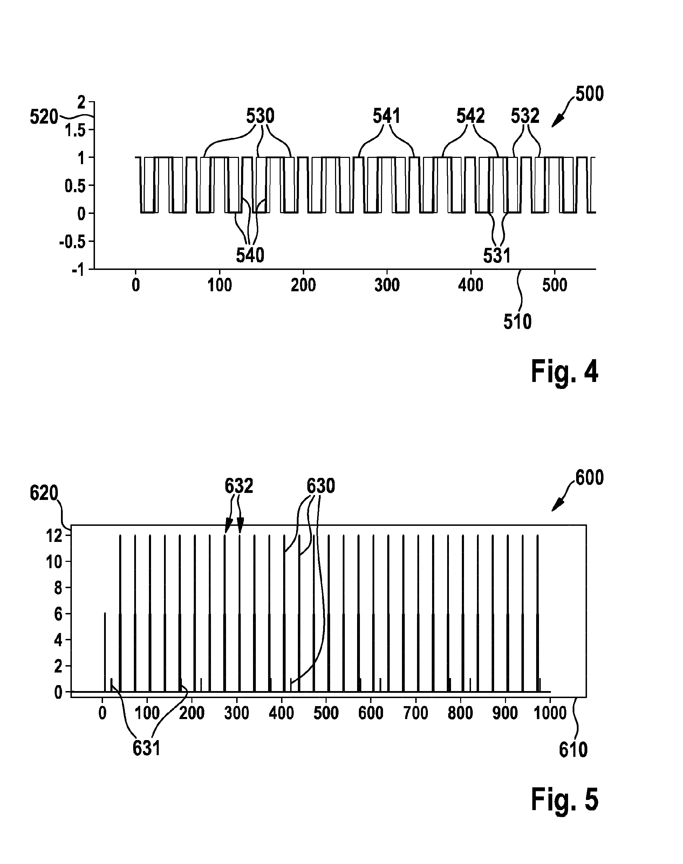

Figur 4 zeigt ein drittes Diagramm 500, auf dessen horizontaler Achse eine Zeit 510 in ms und auf dessen vertikaler Achse eine Lichtintensität 520 in willkürlichen Einheiten aufgetragen ist. Dargestellt ist ein Intensitätsverlauf 530 einer pulsierenden Lichtquelle, also einer Lichtquelle, die mit Wechselspannung betrieben wird. Erkennbar ist, dass die Intensität des von der Lichtquelle ausgesandten Lichts zwischen einer niedrigen Intensität 531 und einer hohen Intensität 532 osziliert. Die Lichtquelle kann somit eine Straßenbeleuchtung sein.

Ebenfalls im dritten Diagramm 500 der Figur 4 dargestellt ist ein Belichtungszeitverlauf 540 einer bimodal geregelten Kamera. Der Belichtungszeitverlauf 540 wechselt zwischen einer kurzen ersten Belichtungszeit 541 und einer langen zweiten Belichtungszeit 542 hin und her. Die Kamera nimmt somit immer abwechselnd Bilder mit der kurzen ersten Belichtungszeit 541 und mit der langen zweiten Belichtungszeit 542 auf.

Der Wechsel zwischen der kurzen ersten Belichtungszeit 541 und der zweiten Belichtungszeit 542 im Belichtungszeitverlauf 540 erfolgt mit einer festgelegten Bildwiederholfrequenz. Der Wechsel zwischen der niedrigen Intensität 131 und der hohen Intensität 532 im Intensitätsverlauf 530 erfolgt mit einer Netzfrequenz des Wechselspannungsnetzes, das die Lichtquelle versorgt. Die Netzfrequenz kann beispielsweise 50 Hz oder 60 Hz betragen. Die Bildwiederholfrequenz der Kamera kann ein ganzzahliges Vielfaches der Netzfrequenz sein. Somit kann die Bildwiederholfrequenz beispielsweise 50 Hz bzw. 60 Hz oder 100 Hz bzw. 120 Hz betragen.

Figur 5 zeigt ein viertes Diagramm 600, auf dessen horizontaler Achse eine Zeit 610 in ms und auf dessen vertikaler Achse eine detektierte Helligkeit 20 in willkürlichen Einheiten aufgetragen ist. Dargestellt ist ein Helligkeitsverlauf 630 einer Helligkeit der gemäß des Belichtungszeitverlaufs 540 des dritten Diagramms 500 aufgenommenen Bilder. Einige Bilder weisen eine niedrige erste Helligkeit 631 auf. Andere Bilder weise eine hohe zweite Helligkeit 631 auf. Die erste Helligkeit 631 und die zweite Helligkeit 632 treten jedoch nicht abwechselnd auf. Der Helligkeitsverlauf 630 ist abhängig vom Verhältnis der Frequenz des Intensitätsverlaufs 530 und der Bildwiederholfrequenz des Belichtungszeitverlaufs 540 der Kamera. Die Intensität 530 der Lichtquelle pulsiert mit der Netzfrequenz des Stromnetzes, das die Lichtquelle versorgt. Die Netzfrequenz beträgt beispielsweise 50 Hz oder 60 Hz. Die Kamera nimmt Bilder mit einer Bildwiederholfrequenz auf, die so bemessen ist, dass die Netzfrequenz ein ganzzahliges Vielfaches der Bildwiederholfrequenz ist. Daraus ergibt sich der im vierten Diagramm 600 dargestellte Helligkeitsverlauf 630, der nicht entsprechend der Bildwiederholfrequenz pulsiert. Daraus kann geschlossen werden, dass die Intensität 530 des von der Lichtquelle ausgesandten Lichts pulsiert, die Lichtquelle also mit einer Wechselspannung betrieben wird und es sich bei der Lichtquelle somit wahrscheinlich um eine Straßenbeleuchtung handelt.

Figuren 2 bis 5 haben erläutert, dass mit einer bimodal geregelten Kamera pulsierende Lichtquellen von nicht pulsierenden Lichtquellen unterschieden werden können, wenn die Frequenz der Pulsung ein ganzzahliges Vielfaches der Bildwiederholfrequenz der Kamera ist. Es ist jedoch auch möglich, pulsierende Lichtquellen von nicht-pulsierenden Lichtquellen mit einer monomodal geregelten Kamera zu unterscheiden. Hierbei sollte die monomodal geregelte Kamera eine Bildwiederholfrequenz aufweisen, die kein ganzzahliges Vielfaches der Netzfrequenz ist, mit der pulsierende Lichtquellen betrieben werden.

## Patentansprüche

1. Verfahren zum Erkennen einer Straßenbeleuchtung (120),
**dadurch gekennzeichnet,**
**dass** an einer Straßenoberfläche (110) reflektiertes Licht (140) mit einer Kamera (220) aufgenommen
und eine zeitliche Modulation (630) der Helligkeit (620) des reflektierten Lichts (140) detektiert wird.

2. Verfahren gemäß Anspruch 1,
wobei eine von einer Netzfrequenz eines Stromnetzes abhängige zeitliche Modulation (630) der Helligkeit (620) des reflektierten Lichts (140) detektiert wird.

3. Verfahren gemäß einem der vorhergehenden Ansprüche,
wobei das reflektierte Licht (140) mit einer mindestens bimodal geregelten Kamera (220) aufgenommen wird.

4. Verfahren gemäß Anspruch 3,
wobei das reflektierte Licht (140) mit einer Bildwiederholfrequenz aufgenommen wird,
wobei eine Netzfrequenz eines Stromnetzes ein ganzzahliges Vielfaches der Bildwiederholfrequenz ist.

5. Verfahren gemäß einem der Ansprüche 1 oder 2,
wobei das reflektierte Licht (140) mit einer monomodal geregelten Kamera (220) aufgenommen wird.

6. Verfahren gemäß Anspruch 5,
wobei das reflektierte Licht (140) mit einer Bildwiederholfrequenz aufgenommen wird, die kein ganzzahliges Vielfaches einer Netzfrequenz eines Stromnetzes ist.

7. Vorrichtung zum Erkennen einer Straßenbeleuchtung (120),
mit einer Kamera (220), die dazu vorgesehen ist, an einer Straßenoberfläche (110) reflektiertes Licht (140) aufzunehmen,
und mit einer Auswerteeinheit, die dazu ausgebildet ist, eine zeitliche Modulation (630) der Helligkeit (620) des reflektierten Lichts (140) zu erkennen.

8. Vorrichtung gemäß Anspruch 7,
wobei die Kamera (220) eine mindestens bimodal geregelte Kamera ist, wobei die Kamera (220) eine Bildwiederholfrequenz aufweist,
wobei eine Netzfrequenz eines Stromnetzes ein ganzzahliges Vielfaches der Bildwiederholfrequenz ist.

9. Vorrichtung gemäß Anspruch 7,
wobei die Kamera (220) eine monomodal geregelte Kamera ist,
wobei die Kamera (220) eine Bildwiederholfrequenz aufweist, die kein ganzzahliges Vielfaches einer Netzfrequenz eines Stromnetzes ist.

10. Kraftfahrzeug mit einer Vorrichtung gemäß einem der Ansprüche 7 bis 9.
